**Europäisches Patentamt**

**European Patent Office**

**Office européen des brevets**

(19)

(11) Veröffentlichungsnummer : **0 475 900 A2**

(12) ## EUROPÄISCHE PATENTANMELDUNG

(21) Anmeldenummer : **91810699.8**

(22) Anmeldetag : **03.09.91**

(51) Int. Cl.$^5$ : **C08K 3/00,** F21V 7/00, C08L 87/00

(30) Priorität : **12.09.90 CH 2951/90**

(43) Veröffentlichungstag der Anmeldung : **18.03.92 Patentblatt 92/12**

(84) Benannte Vertragsstaaten : **DE FR GB IT NL**

(71) Anmelder : **CIBA-GEIGY AG Klybeckstrasse 141 CH-4002 Basel (CH)**

(72) Erfinder : **Breitenfellner, Franz, Dr. Konrad-Adenauer-Strasse 56 W-6140 Bensheim 1 (DE)**

(54) **Lichtreflektierender Körper.**

(57)    Lichtreflektierender Körper, dessen Wandungen aus einem mit feinteiligem Kaolin und Hydrotalcit versehenen Polyphenylensulfid besteht, wobei auf mindestens einer Fläche der Wandung eine reflektierende Metallschicht ohne Zwischenschicht aufgebracht ist.

EP 0 475 900 A2

Die vorliegende Erfindung betrifft lichtreflektierende Körper, wie Scheinwerfer oder Spiegel, deren Wandung aus einem mit feinteiligem Kaolin und Hydrotalcit versehenen Polyphenylsulfid besteht, wobei auf mindestens eine Fläche der Wandung eine lichtrelektierende Metallschicht ohne Zwischenschicht aufgebracht ist.

Reflektoren, deren Formteile oder Wandungen aus anorganische und gegebenenfalls faserverstärkende Füllstoffe enthaltendem Polyphenylensulfid und einer darauf aufgebrachten Metallschicht bestehen, sind bekannt, beispielsweise aus EP-A-87 145, EP-A-197 830, EP-A-328 965, EP-A 340 954, US-Patent 4,474,921 und US-Patent 4,794,026. Es ist ferner bekannt, dass man durch Zusatz von verstärkenden Füllstoffen zu Polyphenylensulfid die mechanischen Eigenschaften sowie die Wärmeformbeständigkeit dieser Formmassen verbessern kann. Bei den angestrebten hohen Füllgraden verschlechtert sich jedoch im allgemeinen die Oberflächenqualität der spritzgegossenen Formteile derart, dass eine im Vakuum aufgedampfte Metallschicht, wie beispielsweise eine Aluminiumschicht, rauh erscheint. Das Aufbringen einer Zwischenlackierung zur Verbesserung der Oberflächenqualität vor der Verspiegelung mittels einer Metallschicht ist wirtschaftlich nachteilig.

Es wurde nun überraschend gefunden, dass man durch die Verwendung von feinteiligem Kaolin auch bei hohen Füllgraden in Polyphenylensulfiden im normalen Spritzgiessverfahren, d.h. Einkomponentenverfahren, Formteile mit ausgezeichneten Oberflächen erzielen kann, die eine direkte Bedampfung mit Metallen zur Erzielung einer reflektierenden Metallschicht ermöglichen. Durch den weiteren Zusatz von Hydrotalcit in realtiv geringen Mengen werden ausserdem lichtreflektierende Metallschichten erhalten, die gegenüber Hitze und Feuchtigkeit korrosionsbeständig sind.

Gegenstand vorliegender Erfindung ist somit ein lichtreflektierender Körper, dessen Wandungen aus einem mit feinteiligen Füllstoffen versehenen Polyphenylensulfid besteht, wobei auf mindestens einer Fläche der Wandung eine reflektierende Metallschicht aufgebracht ist, dadurch gekennzeichnet, dass die Wandung

(a) 70-30 Gew.-% Polyphenylsulfid mit einem Schmelzindex von 50 bis 1000 g/10 Minuten,

(b) 30-70 Gew.-% Kaolin mit einer mittleren Partikelgrösse von kleiner als 10 $\mu m$,

(c) 0,1-3 Gew.-% Hydrotalcit und

(d) 0-1 Gew.-% eines Verarbeitungshilfsmittel enthält, wobei die Masse aus (a), (b), (c) und (d) zusammen 100 Gew.-% beträgt und wobei die Metallschicht ohne Zwischenschicht auf die Fläche der Wandung aufgebracht ist.

Vorzugsweise enthalten die Wandungen der erfindungsgemässen Körper aus

(a) 60-35 Gew.-% Polyphenylsulfid,

(b) 40-65 Gew.-% Kaolin und

(c) 0,5-2 Gew.-% Hydrotalcit.

Für die Zwecke der Erfindung kann jedes lineare oder nach dem Curing-Verfahren hergestellte Polyphenylensulfid (PPS) eingesetzt werden. Die erfindungsgemäss zu verwendenden PPS bestehen ganz oder im wesentlichen aus p-Phenylensulfid-Einheiten, doch können die Polyphenylensulfide auch, etwa bis zu 10 Mol-%, aus o-Phenylensulfid-Einheiten oder anderen Arylensulfid-Einheiten, worin beispielsweise das Arylen ein alkylsubstituiertes Phenylen, eine p,p'-Diphenylensulfongruppe, p,p'-Diphenylenethergruppe, p,p'-Diphenylencarbonylgruppe, ein Biphenylen oder Naphthylen ist, enthalten.

Die erfindungsgemäss zu verwendenden Polyphenylensulfide (PPSe) weisen vorzugsweise einen Schmelzindex (Melt flow index = MFI) von 50 bis 800 g/10 Minuten auf. Bekanntlich ist der Schmelzindex ein Mass für die Schmelzviskosität von Thermoplasten und somit auch für die erfindungsgemäss zu verwendenden PPSe. Gemäss DIN 53 735 ist der Schmelzindex die Menge des Thermoplasten, die in 10 Minuten unter der Wirkung einer festgelegten Kraft durch eine genormte Düse ausgepresst wird. Je kleiner der Schmelzindex, um so grösser ist das Molekulargewicht des Thermoplasten. Die nachstehend angeführten MFI-Werte wurden bei einer Temperatur von 315 °C, einer Prüflast von 2,16 kg und einer Aufschmelzzeit von 5 Minuten ermittelt.

Das erfindungsgemäss zu verwendende PPS ist ein Polymer, dessen Molekulargewicht durch Zufuhr ausreichender Energie, wie Wärme, bevorzugt in Gegenwart von Sauerstoff, erhöht werden kann, entweder durch Kettenverlängerung oder durch Vernetzen oder durch Kombination von beiden. Das Nachbehandlungsverfahren, durch das das Molekulargewicht der Polymeren erhöht wird, kann als Curing-Verfahren bezeichnet werden. Die Nachbehandlung der PPSe wird in JMS-Rev. Macromol. Chem. Phys. C 29(1), 1989, Seite 97 ff, anhand von mehreren Verfahren näher beschrieben.

Die erfindungsgemäss zu verwendenden Füllstoffe (b) und (c), Kaolin und Hydrotalcit, sind bekannt. Kaoline, hydratisierte Aluminiumsilikate, mit einer mittleren Partikelgrösse von kleiner als 10 $\mu m$ sind im Handel erhältlich, beispielsweise unter der Handelsbezeichnung ASP, Santitone oder Translink der Firma Engelhard. Vorzugsweise verwendet man als Kaolin ein calciniertes Kaolin, insbesondere solche, die mit einem Silan, beispielsweise $\gamma$-Aminopropyltrimethoxysilan, beschichtet sind. Die Partikelgrösse der Kaoline lässt sich in bekannter Weise mittels der Laserlichtstreumethode messen.

Das erfindungsgemäss zu verwendende Hydrotalcit entspricht der allgemeinen Formel $[Mg_{1-x}Al_x(OH)_2]^{x+}$ $[A_{x/n}mH_2O]^{x-}$, in der n die Ladung am Anion A ist, m die Molzahl des Hydratationswassers ist, x weniger als 1 ist und Magnesium durch Calcium, Zink, Kupfer, Mangan, Lithium oder Nickel ersetzt sein kann und Aluminium durch Chrom (+3) oder Eisen ersetzt werden kann, wobei A insbesondere Carbonat oder Phosphat ist.

Vorzugsweise verwendet man ein Hydrocalcit der Formel $Mg_{4,5}Al_2(OH)_{13}CO_3 \cdot 3,5\ H_2O$.

Als Verarbeitungshilfsmittel (d) können beispielsweise Gleitmittel oder Stabilisatoren eingesetzt werden. Vorzugsweise verwendet man als Verarbeitungshilfsmittel ein Polyethylen, insbesondere ein Polyethylen hoher Dichte.

Die erfindungsgemässen lichtreflektierenden Körper können als konvexe, beispielsweise parabolische, konkave oder plane Spiegel ausgebildet sein. Ein besonders bevorzugter Anwendungsbereich sind Scheinwerfer, insbesondere für Kraftfahrzeuge, die bezüglich Lichtreflexion, Leuchtkraft und Lebensdauer mit den üblichen Metallscheinwerfern vergleichbar sind. Die Wandstärke der Körper kann 0,5 bis 5 mm betragen.

Die Herstellung der erfindungsgemässen Körper kann nach in der Technik üblichen Spritzgiessverfahren aus entsprechend gefüllten Formmassen, die noch weitere übliche Zusätze, wie Pigmente oder Formtrennmittel, enthalten können, erfolgen. Die Formtemperaturen können hierbei auf etwa 120 bis 150°C eingestellt werden, die Zylindertemperaturen auf 300-340°C.

Nach dem Formen der Wandung wird die zu verspiegelnde Seite des Körpers mit einer Metallschicht versehen, was nach üblichen Methoden durch zum Beispiel Aufdampfen von Aluminium, vorzugsweise im Vakuum, geschehen kann.

Die erfindungsgemässen reflektierenden Körper weisen glatte Oberflächen mit gleichmässigem Reflexionsvermögen auf. Für objektive Glanzbeurteilungen wird ein Reflektometer von Dr. Lange eingesetzt, wobei die Glanzbeurteilung gemäss DIN 67 530 vorgenommen wird.

Beispiel 1:

Mit Hilfe eines Labor-Kokneters mit 46 mm Schneckendurchmesser werden 50 Teile Polyphenylensulfid (Melt Flow Index (MFI) = 105 g/10 min; Handelsprodukt der Phillips Petroleum Company) mit 48,75 Teilen calciniertem Kaolin (mittlere Korngrösse = 4 µm; Dichte = 2,6 g/cm³), 1 Teil Hydrotalcit der allgemeinen Formel $Mg_{4,5}Al_2(OH)_{13}CO_3 \cdot 3,5\ H_2O$ und 0,25 Teilen Polyethylen (MFI = 30 g/10 min.; Dichte = 0,96 g/cm³) gemischt und bei 320°C granuliert. Nach dem Trocknen der Granulate bei 140°C während 4 Stunden erfolgt ihre Verarbeitung zu Spirtzgiessformkörpern unter folgenden Bedingungen: Zylindertemperatur 320°C, Werkzeugtemperatur 140°C, Zykluszeit 30 sec.

An den Formkörpern werden zur Beurteilung der mechanischen und physikalisch-thermischen Eigenschaften die Biegefestigkeit, Zugfestigkeit, Bruchdehnung und Wärmeformbeständigkeit sowie der E-Modul ermittelt.

Unter den oben angeführten Bedingungen werden mit Hilfe eines auf Hochglanz polierten Spritzgiesswerzeuges Platten mit den Abmessungen 100x100x2 mm hergestellt. Die Charakterisierung der Oberflächenqualität dieser Platten erfoglt durch die Bestimmung des Glanzwertes nach DIN 67 530 sowie visuell. Bei der Ermittlung des Glanzwertes wird mit einem Reflektometer (Hersteller Dr. Lange) unter einem Einstrahlwinkel von 20°, ein relativer Wert (bezogen auf einen Eichstandard) des reflektierten Lichtes als Mass für die Oberflächenqualität ermittelt. Zunehmende Glanzwerte bedeuten dabei zunehmende Oberflächenqualitäten.

| | | |
|---|---|---|
| Biegefestigkeit gemäss DIN 53452 [N/mm²] | = | 109 |
| Zugfestigkeit gemäss DIN 53455 [N/mm²] | = | 64 |
| Bruchdehnung gemäss DIN 53455 [%] | = | 0,7 |
| E-Modul gemäss DIN 53457 [N/mm²] | = | 11500 |
| Wärmeformbeständigkeit gemäss ISO 75 | | |
| Verfahren A [°C] | = | 165 |
| Verfahren B [°C] | > | 260 |
| Glanzwert gemäss DIN 67530 | = | 160 |
| Oberflächenqualität, visuell | | = glatt |

Beispiele 2-4:

In gleicher Weise wie in Beispiel 1 werden Platten der Abmessungen 100x100x2 mm aus den Zusammensetzungen gemäss Tabelle 1 hergestellt. Die Polyphenylensulfid-Harze mit den angeführten MFI's eignen sich zur Herstellung von Formteilen mit glatten Oberflächen für die weitere Bearbeitung durch Metallisierung.

Tabelle 1:

| Zusammensetzung | | Beispiel 2 | Beispiel 3 | Beispiel 4 |
|---|---|---|---|---|
| PPS (1) | Gew.-% | 45 | | |
| PPS (2) | Gew.-% | | 45 | |
| PPS (3) | Gew.-% | | | 45 |
| Kaolin (4) | Gew.-% | 53,9 | 53,9 | 53,9 |
| Hydrotalcit (5) | Gew.-% | 1 | 1 | 1 |
| OP Wachs (6) | | 0,1 | 0,1 | 0,1 |
| **Eigenschaften** | | | | |
| Glanzwerte gemäss DIN 67530 | | 142 | 158 | 171 |
| Oberflächenqualität, visuell | | glatt | glatt | glatt |

(1)　Polyphenylensulfid (lineares Harz, MFI = 53 g/10 min.; Phillips Petroleum Company)

(2)　Polyphenylensulfid (hergestellt nach dem sogenannten "Curing-Verfahren", MFI = 105 g/10 min.; Phillips Petroleum Company)

(3)　Polyphenylensulfid (hergestellt nach dem "Curing-Verfahren", MFI = 670 g/10 min.; Phillips Petroleum Company)

(4)　calciniert (mittlere Korngrösse 4 µm, beschichtet mit 1 Gew.-% Gamma-Aminopropyltrimethoxysilan, bezogen auf den Füllstoff)

(5)　allgemeine Formel $Mg_{4,5}Al_2(OH)_{13}CO_3 \cdot 3,5\ H_2O$

(6)　teilverseiftes Esterwachs aus Montansäuren (Firma Hoechst AG).

Beispiele 5 und 6:

Auf Platten mit Abmessungen 100x100x2 mm, die Zusammensetzungen gemäss Tabelle 2 aufweisen und in gleicher Weise wie in den vorhergehenden Beispielen hergestellt werden, wird im Vakuum eine Aluminiumschicht einseitig aufgedampft. Die bespiegelte Oberfläche der Teile gemäss den Beispielen 5 und 6 erscheint hochglänzend glatt. Einen Hitzetest bei 180°C während 350 Stunden überstehen die aufgedampften Spiegelschichten unbeschädigt sowie eine Lagerung im Feuchtklima von 95 % relativer Feuchte und hoher Temperatur von 90°C.

Tabelle 2:

| Zusammensetzung | | Beispiel 5 | Beispiel 6 |
|---|---|---|---|
| PPS (a) | Gew.-% | 45 | 65 |
| Kaolin (b) | Gew.-% | 53,75 | 33,75 |
| Hydrocalcit (c) | Gew.-% | 1 | 1 |
| Polyethylen (d) | | 0,25 | 0,25 |
| **Eigenschaften** | | | |
| Oberflächenqualität, visuell | | glatt | glatt |
| Korrosionstest; 95 % rel. Feuchte, 90°C, 350 Stunden | | Al-Schicht nicht korrodiert | Al-Schicht nicht korrodiert |
| Hitzetest: 180°C, 350 Stunden | | Al-Schicht unbeschädigt | Al-Schicht unbeschädigt |

(a)  Polyphenylsulfid (MFI = 670 g/10 min.: Phillips Petroleum Company)

(b)  calciniert (mittlere Korngrösse 4 µm, beschichtet mit 1 Gew.-% Gamma-Amino-propyltrimethoxysilan, bezogen auf den Füllstoff)

(c)  allgemeine Formel $Mg_{4,5}Al_2(OH)_{13}CO_3 \cdot 3,5\ H_2O$

(d)  Polyethylen hoher Dichte (d = 0,96 g/cm$^3$, MFI = 30 g/10 min., Phillips Petroleum Company)

Beispiele 7 und 8:

Mit Hilfe eines Labor-Kokneters mit 46 mm Schneckendurchmesser werden die in Tabelle 3 angeführten Zusammensetzungen bei 320°C compoundiert und anschliessend granuliert. Nach dem Trocknen der Granulate bei 140°C während 4 Stunden erfolgt ihre Spritzgiessverarbeitung zu Platten mit den Abmessungen 100 x 100 x 2 mm unter folgenden Bedingungen:

Zylindertemperatur 320°C
Werkzeugtemperatur 140°C
Zykluszeit 30 sec.

Die Platten werden im Vakuum mit einer Aluminiumschicht einseitig bedampft. Ihre Oberfläche erscheint nach dem Bedampfen hochglänzend glatt. Sie überstehen einen Hitzetest bei 180°C während 350 Stunden unbeschädigt. Ebenso hält die aufgedampfte Schicht einer Lagerung im Feuchtklima bei 95 % relativer Feuchte und 90°C über 350 Stunden stand.

Tabelle 3:

| Zusammensetzung | | Beispiel 7 | Beispiel 8 |
|---|---|---|---|
| PPS (a) | Gew.-% | 45 | 45 |
| Kaolin (b) | Gew.-% | 51,75 | 54,25 |
| Hydrocalcit (c) | Gew.-% | 3 | 0,5 |
| HDPE (d) | | 0,25 | 0,25 |
| **Eigenschaften** | | | |
| Oberflächenqualität, visuell | | glatt | glatt |
| Korrosionstest; 95 % rel. Feuchte, 90°C, 350 Stunden | | Al-Schicht nicht kor-rodiert | Al-Schicht nicht kor-rodiert |
| Hitzetest: 180°C, 350 Stunden | | Al-Schicht unbeschädigt | Al-Schicht unbeschädigt |

(a)  Polyphenylensulfid, Phillips Petroleum Company, MFI = 670 g/10 min.

(b)  Calcinierter Kaolin, mittlere Korngrösse 4 µm, beschichtet mit 1 Gew.-% Gamma-Aminopropyltrimethoxysilan bezogen auf den Füllstoff.

(c)  Hydrotalcit $Mg_{4,5}Al_2(OH)_{13}CO_3\cdot3,5H_2O$.

(d)  Polyethylen hoher Dichte, Phillips Petroleum Company, d = 0,962 g/cm³, MFI = 30 g/min.

**Patentansprüche**

1.  Lichtreflektierender Körper, dessen Wandungen aus einem mit feinteiligen Füllstoffen versehenen Polyphenylensulfid besteht, wobei auf mindestens einer Fläche der Wandung eine reflektierende Metallschicht aufgebracht ist, dadurch gekennzeichnet, dass die Wandung
    (a) 70-30 Gew.-% Polyphenylensulfid mit einem Schmelzindex von 50 bis 1000 g/10 Minuten,
    (b) 30-70 Gew.-% Kaolin mit einer mittleren Partikelgrösse von kleiner als 10 µm,
    (c) 0,1-3 Gew.-% Hydrotalcit und
    (d) 0-1 Gew.-% eines Verarbeitungshilfsmittel enthält, wobei die Masse aus (a), (b), (c) und (d) zusammen 100 Gew.-% beträgt und wobei die Metallschicht ohne Zwischenschicht auf die Fläche der Wandung aufgebracht ist.

2.  Körper gemäss Anspruch 1, dadurch gekennzeichnet, dass die Wandung aus
    (a) 60-35 Gew.-% Polyphenylensulfid
    (b) 40-65 Gew.-% Kaolin und
    (c) 0,5-2 Gew.-% Hydrotalcit enthält.

3.  Körper gemäss Anspruch 1, dadurch gekennzeichnet, dass das Polyphenylensulfid einen Schmelzindex von 50 bis 800 g/10 Minuten aufweist.

4. Körper gemäss Anspruch 1, dadurch gekennzeichnet, dass er als Kaolin (b) ein calciniertes Kaolin enthält.

5. Körper gemäss Anspruch 4, dadurch gekennzeichnet, dass das calcinierte Kaolin mit einem Silan beschichtet ist.

6. Körper gemäss Anspruch 1, dadurch gekennzeichnet, dass er als Hydrotalcit (c) ein solches der Formel $Mg_{4,5}Al_2(OH)_{13}CO_3 \cdot 3,5\ H_2O$ enthält.

7. Körper gemäss Anspruch 1, dadurch gekennzeichnet, dass er als Verarbeitungshilfsmittel (d) ein Polyethylen, insbesondere ein Polyethylen hoher Dichte, enthält.